# EUROPEAN PATENT SPECIFICATION

(11) **EP 4 553 784 B1**
(45) Date of publication and mention of the grant of the patent: **08.07.2026**
(21) Application number: 24177372.0
(22) Date of filing: 22.05.2024
(51) Int. Cl.: G06V 10/764, G06V 10/80, G06V 10/82, G06V 20/64, G06V 20/56

(54) **METHOD AND APPARATUS WITH THREE-DIMENSIONAL OBJECT PERCEPTION BACKGROUND**
VERFAHREN UND VORRICHTUNG MIT HINTERGRUND ZUR WAHRNEHMUNG DREIDIMENSIONALER OBJEKTE
PROCÉDÉ ET APPAREIL AVEC FOND DE PERCEPTION D'OBJET TRIDIMENSIONNEL

(30) Priority: 13.11.2023 KR 20230156519
(43) Date of publication of application: 14.05.2025
(73) Proprietor: Samsung Electronics Co., Ltd., Suwon-si, Gyeonggi-do 16677 (KR)
(72) Inventor: LEE, Dongwook, 16678 Suwon-si (KR); EOM, Chanho, 16678 Suwon-si (KR); YOO, Byung In, 16678 Suwon-si (KR); LEE, Hyunjeong, 16678 Suwon-si (KR)
(74) Representative: Arnold & Siedsma

(56) References cited:
- ZENG YIHAN ET AL: "CLIP2: Contrastive Language-Image-Point Pretraining from Real-World Point Cloud Data", 2023 IEEE/CVF CONFERENCE ON COMPUTER VISION AND PATTERN RECOGNITION (CVPR), IEEE, 17 June 2023 (2023-06-17), pages 15244 - 15253, XP034402484, DOI: 10.1109/CVPR52729.2023.01463
- LU YUHENG ET AL: "Open-Vocabulary 3D Detection via Image-level Class and Debiased Cross-modal Contrastive Learning", 5 July 2022 (2022-07-05), pages 1 - 14, XP093199172, Retrieved from the Internet <URL:https://arxiv.org/pdf/2207.01987> [retrieved on 20240827]
- GEORG HESS ET AL: "LidarCLIP or: How I Learned to Talk to Point Clouds", ARXIV.ORG, CORNELL UNIVERSITY LIBRARY, 201 OLIN LIBRARY CORNELL UNIVERSITY ITHACA, NY 14853, 13 December 2022 (2022-12-13), XP091393589

## Description

### BACKGROUND

### 1. Field

The following description relates to a method and apparatus with three-dimensional object perception.

### 2. Description of Related Art

Technical automation of a perception process has been implemented through a neural network model implemented, for example, by a processor configured as a special computing structure, which provides intuitive mapping for computation between an input pattern and an output pattern after considerable training. Such a trained capability of generating the mapping may be referred to as a learning ability of the neural network model. Furthermore, a neural network model trained and specialized through special training has, for example, a generalization ability to provide a relatively accurate output with respect to an untrained input pattern.

Zheng Yihan et al. ("CLIP2 : Contrastive Language-Image-Point Pretraining from Real-World Point Cloud Data", 17 June 2023, DOI: 10/1109/CVPR52729.2023.01463) discloses a method of contrastive language-image-point cloud pre-training (CLIP²) which directly learns the transferable 3D point cloud representation in realistic scenarios with a proxy alignment mechanism. Specifically, the method exploits naturally-existed correspondences in 2D and 3D scenarios, and builds well-aligned and instance-based text-image-point proxies from those complex scenarios. On top of that, the method proposes a cross-modal contrastive objective to learn semantic and instance-level aligned point cloud representation.

### SUMMARY

The invention is defined by the set of appended claims. This Summary is provided to introduce a selection of concepts in a simplified form that are further described below in the Detailed Description.

In one general aspect, a method of detecting a three-dimensional (3D) object is provided according to claim 1. The method includes: receiving an input image with respect to a 3D space, an input point cloud with respect to the 3D space, and an input language with respect to a target object in the 3D space; using an encoding model to generate candidate image features of partial areas of the input image, a point cloud feature of the input point cloud, and a linguistic feature of the input language; selecting a target image feature corresponding to the linguistic feature from among the candidate image features based on similarity scores of similarities between the candidate image features and the linguistic feature; generating a decoding output by executing a multi-modal decoding model based on the target image feature and the point cloud feature; and detecting a 3D bounding box corresponding to the target object by executing an object detection model based on the decoding output.

The generating of the candidate image features, the point cloud feature, and the linguistic feature includes: generating the linguistic feature corresponding to the input language by a language encoding model performing inference on the input language; generating candidate image features corresponding to partial areas of the input image by executing an image encoding model and a region proposal model based on the input image; and generating a point cloud feature corresponding to the input point cloud by executing a point cloud encoding model based on the input point cloud.

The method may further include generating extended expressions each including (i) a position field that indicates a geometric characteristic of the target object based on the input language and including (ii) a class field indicates a class of the target object, and wherein the linguistic feature is generated based on the extended expressions.

Objects of a same class and with different geometric characteristics may be distinguished from each other based on the position fields of the extended expressions.

The position field may be learned through training.

The generating of the decoding output may include: generating image tokens by segmenting the target image feature; generating point cloud tokens by segmenting the point cloud feature; generating first position information indicating relative positions of the respective image tokens; generating second position information indicating relative positions of the respective point cloud tokens; and executing the multi-modal decoding model with key data and value data based on the image tokens, the point cloud tokens, the first position information, and the second position information.

The generating of the decoding output may further include executing the multi-modal decoding model with query data based on detection guide information indicating detection position candidates with a possibility of detecting the target object in the 3D space.

The detection position candidates may be distributed non-uniformly.

The multi-modal decoding model may generate the decoding output by extracting a correlation from the target image feature, the point cloud feature, and the detection guide information.

A non-transitory computer-readable storage medium may store instructions that, when executed by a processor, cause the processor to perform any of the methods.

In another general aspect, an electronic device is provided according to claim 8. The electronic device includes: one or more processors; and a memory storing instructions configured to cause the one or more processors to: receive an input image with respect to a three-dimensional (3D) space, an input point cloud with respect to the 3D space, and an input language with respect to a target object in the 3D space; use an encoding model to generate candidate image features of partial areas of the input image, a point cloud feature of the input point cloud, and a linguistic feature of the input language; select a target image feature corresponding to the linguistic feature from the candidate image features based on similarity scores of similarities between the candidate image features and the linguistic feature; generate a decoding output by executing a multi-modal decoding model based on the target image feature and the point cloud feature; and detect a 3D bounding box corresponding to the target object by executing an object detection model based on the decoding output.

The instructions are further configured to cause the one or more processors to: generate a linguistic feature corresponding to the input language by a language encoding model performing inference on the input language, generate candidate image features corresponding to partial areas of the input image by executing an image encoding model and a region proposal model based on the input image, and generate a point cloud feature corresponding to the input point cloud by executing a point cloud encoding model based on the input point cloud.

The instructions may be further configured to cause the one or more processors to generate extended expressions each including (i) a position field indicating a geometric characteristic of the target object based on the input language and (ii) a class field indicating a class of the target object are generated, and wherein the linguistic feature is generated based on the extended expressions.

Objects of a same class with different geometric characteristics may be distinguished from each other based on the position field.

The position field may be learned through training.

The instructions may be further configured to cause the one or more processors to: generate image tokens by segmenting the target image feature, generate point cloud tokens by segmenting the point cloud feature, generate first position information indicating relative positions of the respective image tokens, generate second position information indicating relative positions of the respective point cloud tokens, and execute the multi-modal decoding model with key data and value data based on the image tokens, the point cloud tokens, the first position information, and the second position information.

The instructions may be further configured to cause the one or more processors to execute the multi-modal decoding model with query data based on detection guide information indicating detection position candidates with a possibility of detecting the target object in the 3D space.

The detection position candidates may be non-uniformly distributed.

The multi-modal decoding model may be configured to generate the decoding output by extracting a correlation from the target image feature, the point cloud feature, and the detection guide information.

In another general aspect, a vehicle includes: a camera configured to generate an input image with respect to a three-dimensional (3D) space; a light detection and ranging (lidar) sensor configured to generate an input point cloud with respect to the 3D space; one or more processors configured to: receive the input image with respect to the 3D space, the input point cloud with respect to the 3D space, and an input language with respect to a target object in the 3D space; use an encoding model to generate candidate image features of partial areas of the input image, a point cloud feature of the input point cloud, and a linguistic feature of the input language; select a target image feature corresponding to the linguistic feature from the candidate image features based on similarity scores of similarities between the candidate image features and the linguistic feature; generate a decoding output by executing a multi-modal decoding model based on the target image feature and the point cloud feature; and detect a 3D bounding box corresponding to the target object by executing an object detection model based on the decoding output; and a control system configured to control the vehicle based on the 3D bounding box.

Other features and aspects will be apparent from the following detailed description, the drawings, and the claims.

### BRIEF DESCRIPTION OF THE DRAWINGS

FIG. 1 illustrates an example configuration of a three-dimensional (3D) object perception model, according to one or more embodiments.
FIG. 2 illustrates an example configuration of a vision-language model, according to one or more embodiments.
FIG. 3 illustrates an example of objects of a same class having different geometric characteristics, according to one or more embodiments.
FIG. 4 illustrates an example operation of a multi-modal decoding model, according to one or more embodiments.
FIG. 5 illustrates an example training process of a vision-language model, according to one or more embodiments.
FIG. 6 illustrates an example training process of a 3D object perception model, according to one or more embodiments.
FIG. 7 illustrates an example of a 3D object recognition method, according to one or more embodiments.
FIG. 8 illustrates an example configuration of an electronic device, according to one or more embodiments.
FIG. 9 illustrates an example configuration of a vehicle, according to one or more embodiments.

Throughout the drawings and the detailed description, unless otherwise described or provided, the same or like drawing reference numerals will be understood to refer to the same or like elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

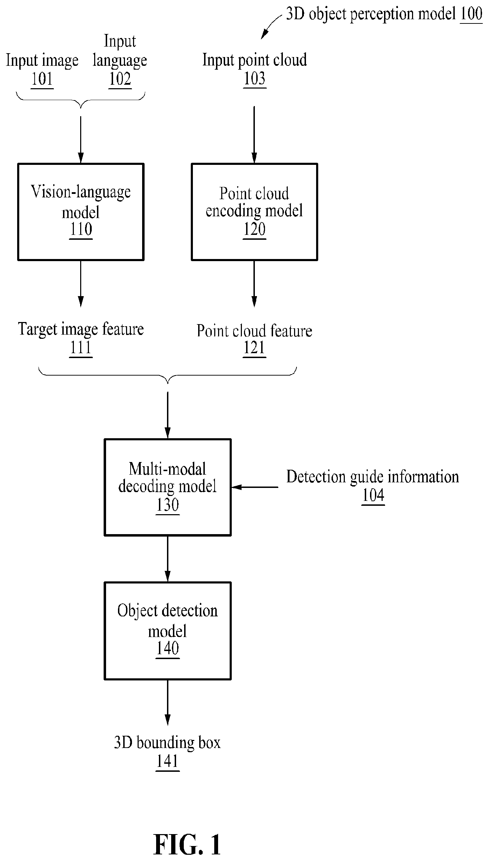

FIG. 1 illustrates an example configuration of a three-dimensional (3D) object perception model, according to one or more embodiments. Referring to FIG. 1, a 3D object perception model 100 may include a vision-language model 110, a point cloud encoding model 120, a multi-modal decoding model 130, and an object detection model 140. Here, "3D object perception" mainly refers to perception in three dimensional space. The vision-language model 110 may be implemented as a contrastive language-image pretraining (CLIP) model, which is a non-limiting example.

The 3D object perception model 100 may receive an input image 101 with respect to a 3D space, an input language 102 with respect to a target object in the 3D space, and an input point cloud 103 with respect to the 3D space. The input language 102 may be words or phrases in a human language. The target object may be an object that is a target of perception. The 3D object perception model 100 may detect a 3D bounding box 141 corresponding to the target object using the vision-language model 110, the point cloud encoding model 120, the multi-modal decoding model 130, and the object detection model 140.

The 3D space may represent an actual/physical space, e.g., one near a vehicle. The input image 101 may be a result of a camera capturing at least a portion of the 3D space. For example, the input image 101 may be a color image, such as an RGB image, an infrared image, a multi-band image, or the like. The camera may include sub-cameras with different views (positions and directions). The input image 101 may include sub-images respectively corresponding to the different views captured by the sub-cameras. For example, sub-images of views in six directions may be generated through sub-cameras of views in six directions. The input point cloud 103 may be a result of sensing at least a portion of the 3D space by a light detection and ranging (lidar) sensor (or a RADAR, or any suitable sensor that may produce a 3D point cloud). A scene shown in the input image 101 and a scene shown in the input point cloud 103 may at least partially overlap. For example, the camera (or the sub-cameras) and the lidar sensor may be installed in a vehicle and may capture the surroundings of the vehicle at a 360-degree angle (full circumferential coverage is not required). The target object may be included in an area where sensing regions of the camera(s) and lidar overlap. A virtual space corresponding to the 3D space may be defined by the input image 101 and the input point cloud 103. The 3D bounding box 141 may be formed in the virtual space.

The vision-language model 110 may learn a relationship between vision information (e.g., image information) and language information (e.g., text information or speech information) and may solve a problem based on the relationship, for example, discerning a 3D bounding box of the target object. The vision-language model 110 may learn various objects through the vision information and the language information and may be used for open vocabulary object detection (VOD) according to a learning characteristic of the vision-language model 110. "OVOD" generally refers to an ability to detect objects that have been subjected to vocabulary learning (training) as well as objects that have not been subjected to vocabulary learning. To elaborate, open VOD models may transfer the multi-modal (e.g., image mode and point cloud mode) capabilities of pre-trained visual-language models to object detection. Open VOD generally expands traditional object detection to open categories and frees the requirement of troublesome annotations, which often must be done manually.

The 3D object perception model 100 may generate candidate image features of partial areas (regions) of the input image 101, a linguistic feature of the input language 102, and a point cloud feature 121 of the input point cloud 103 using respectively corresponding encoding models. The encoding models may include an image encoding model of the vision-language model 110, a language encoding model of the vision-language model 110, and the point cloud encoding model 120. The image encoding model, the language encoding model, and the point cloud encoding model 120 may be respective neural network models that able to generate a feature related to the corresponding input data. For example, an encoding model may be a convolutional neural network (CNN) or a transformer encoder.

The vision-language model 110 may include a language encoding model (e.g., language encoding model 220), an image encoding model (e.g., image encoding model 240), and a region proposal model (e.g., region proposal model 250). The image encoding model may be executed based on the input image 101 and may generate (infer) an image feature of the input image 101, and the region proposal model may determine candidate image features corresponding to partial areas of the input image from the image feature. The language encoding model may be executed based on (applied to) the input language 102 and may generate/infer a linguistic feature corresponding to the input language 102. The vision-language model 110 may determine similarity scores of similarity between candidate image features and the linguistic feature and may select a target image feature 111 corresponding to the linguistic feature from the candidate image features, with the selecting based on the similarity scores. The target image feature 111 may be referred to as an attended image feature because the target image feature 111 is selected through a linguistic feature. The point cloud encoding model 120 may be executed based on (applied to) the input point cloud 103 and may generate/infer the point cloud feature 121 corresponding to the input point cloud 103.

The multi-modal decoding model 130 may be executed based on the target image feature 111 (a first mode) and the point cloud feature 121 (a second mode) and may generate a decoding output. The multi-modal decoding model 130 may analyze a correlation between the target image feature 111 and the point cloud feature 121, the correlation having different modalities. The multi-modal decoding model 130 may determine a shape of the target object from the target image feature 111 corresponding to two-dimensional (2D) image information, may identify points corresponding to the shape of the target object from the point cloud feature 121, and may select a detection position corresponding to a position of the target object, the detection position selected from among detection position candidates of detection guide information 104 and the detection based on positions of the points.

The multi-modal decoding model 130 may be used to detect various objects based on open VOD of the vision-language model 110. A typical prior object perception model may determine and learn a class of a target object in advance (e.g., by training), and addition of class not previously learned may require full re-learning of both the model. That is, typical object perception models require full retraining when a new class is to be learned. The open VOD of the vision-language model 110 may generate the target image features 111 of various objects, including a new class, without requiring a new learning process (e.g., training). The multi-modal decoding model 130 may identify shapes of various objects including an object of a new class with the target image feature 111 and may generate a decoding output to determine the 3D bounding boxes 141 of the objects.

The multi-modal decoding model 130 may be a transformer decoder. The multi-modal decoding model 130 may perform decoding by extracting a correlation from query data, key data, and value data. The key data and the value data may be determined based on the target image feature 111 and the point cloud feature 121, and the query data may be determined based on the detection guide information 104. The detection guide information 104 may indicate detection position candidates having a possibility of detecting a target object in the 3D space.

The object detection model 140 may be executed based on (applied to) the decoding output and to detect the 3D bounding box 141 corresponding to the target object. The object detection model 140 may be a neural network model, such as multi-layer perceptron (MLP).

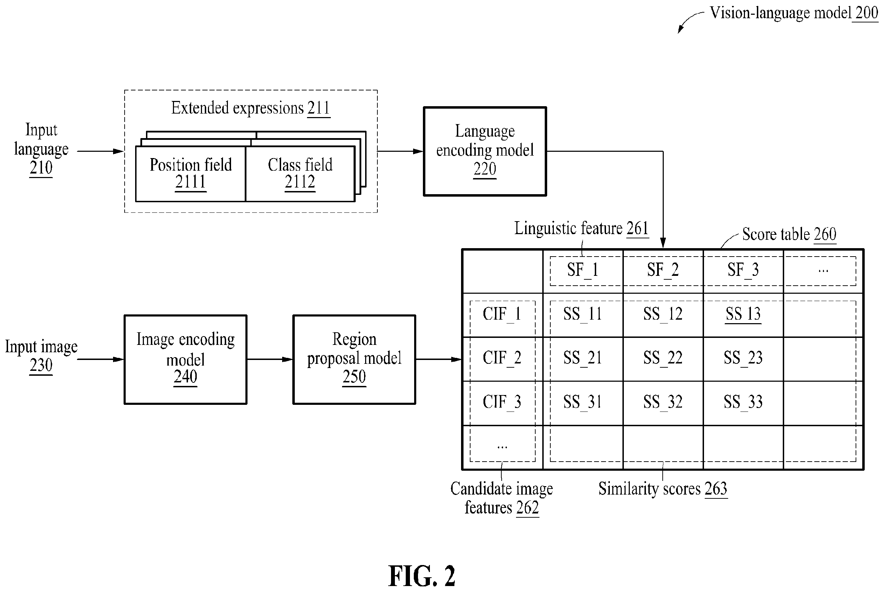

FIG. 2 illustrates an example configuration of a vision-language model, according to one or more embodiments. Referring to FIG. 2, a vision-language model 200 may include a language encoding model 220, an image encoding model 240, and a region proposal model 250. The language encoding model 220, the image encoding model 240, and the region proposal model 250 may be implemented as respective neural network models.

The language encoding model 220 may generate a linguistic feature 261 based on an input language 210. For example, the input language 210 may include text information (text or representation thereof) and/or utterance information. Extended expressions 211 may be generated based on the input language 210. The extended expressions 211 may each include (i) a position field 2111 indicating a geometric characteristic of the corresponding target object and (ii) a class field 2112 indicating a class of the corresponding target object. The class field 2112 may have a different value for a different class (e.g., a vehicle, a person, a traffic signal, and a lane). That is, in some instances there may be multiple extended expressions 211 with a same position field 2111 but with different class fields 2112.

The geometric characteristic of the position field 2111 may include a geometric position, a geometric shape, and/or the like. The position field 2111 may have a different value for a different position (e.g., a short range, a long range, a left side of an image, a right side of an image, an upper side of an image, a lower side of an image, an upper left side of an image, a lower left side of an image, an upper right side of an image, a lower right side of an image). Objects having the same class with different geometric characteristics may be distinguished based on the position field 2111. For example, an object of class "vehicle" in the upper side of an image may be distinguished from an object of class "vehicle" in the lower side of the image based on the position field 2111. In another example, if an "occlusion state" is included as a part/sub-field of the position field 2111, a vehicle whose position field 2111 indicates that the vehicle is in a complete state, i.e., "without occlusion", may be distinguished from a vehicle "with occlusion" in its position field 2111, even if the two are at the same position.

The position field 2111 may have a learnable characteristic (may be trainable). Although a description is provided below, briefly, a value of the position field 2111 may be determined in a training process of the multi-modal decoding model. The input language 210 may correspond to a prompt (a supplemental input piece of information that may guide an inference on a primary input). Based on contextual optimization of the training process, a value of the position field 2111 may be optimized to distinguish and detect various geometric characteristics of each object (such as occlusion/non-occlusion). Objects of the same class with various geometric characteristics may appear, and as the multi-modal decoding model distinguishes and learns the objects of the same class with varying geometric characteristics, the detection accuracy of the multi-modal decoding model for objects of a same corresponding class may be improved.

The image encoding model 240 may generate an image feature corresponding to an input image 230. The region proposal model 250 may determine candidate image features 262 corresponding to partial areas (regions) of the input image 230 based on the image feature. The partial areas may be areas where an object is highly likely to exist.

A score table 260 includes similarity scores 263 between the linguistic feature 261 and the candidate image features 262. The similarity scores 263 are determined based on the Euclidean distance between a linguistic feature and a candidate image feature.

Sub-features SF_1, SF_2, and SF_3 of the linguistic feature 261 may correspond to the extended expressions 211, respectively. For example, the first sub-feature SF_1 may correspond to a first extended expression of the extended expressions 211, the second sub-feature SF_2 may correspond to a second extended expression of the extended expressions 211, and the third sub-feature SF_3 may correspond to a third extended expression of the extended expressions 211.

When a target object is determined/detected, the extended expressions 211 having the target object as the class field 2112 may be configured. For example, when a vehicle is determined to be a target object, the extended expressions 211 at various positions having the vehicle as a class may be configured. The extended expressions 211 of each class may be determined during the training process of the multi-modal decoding model. When the input language 210 designates multiple classes, the extended expressions 211 and the linguistic feature 261 may be configured for each class.

From among the candidate image features 262, at least some of the candidate image features having the highest similarity scores of similarity to the sub-features SF_1, SF_2, and SF_3 of the linguistic feature 261 may be selected to be target image features. For example, when the third candidate image feature CIF_3 indicates/has the highest similarity score (SS_31) to the first sub-feature SF_1, the third candidate image feature CIF_3 may be selected to be a target image feature for the first sub-feature SF_1. Similarly, when the fifth candidate image feature CIF_5 indicates/has the highest similarity score to the second sub-feature SF_2, the fifth candidate image feature CIF_5 may be selected to be a target image feature for the second sub-feature SF_2. When the first candidate image feature CIF_1 indicates/has the highest similarity score to the third sub-feature SF_3, the first candidate image feature CIF_1 may be selected to be a target image feature for the third sub-feature SF_3. As described above, a target image feature for of highest similarity of each sub-feature may be selected and a 3D bounding box corresponding to each target image feature may be determined.

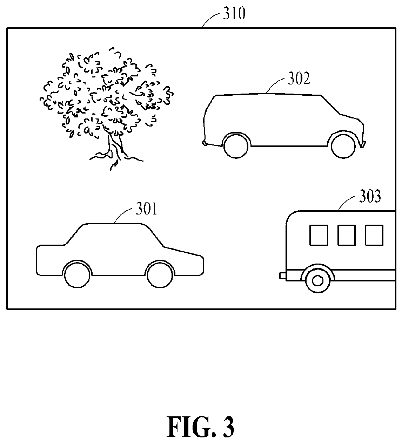

FIG. 3 illustrates an example of objects of a same class having different geometric characteristics, according to one or more embodiments. Referring to FIG. 3, an input image 310 may include a vehicle 301 in a complete state in the lower left side of the input image 310, a vehicle 302 in a complete state in the upper side of the input image 310, and a vehicle 303 in an occluded state in the lower right side of the input image 310. When only the class of the vehicle (among other possible characteristics) is distinguishable by the input language, all of the vehicles 301, 302, and 303 with various characteristics may not be recognized. According to one or more embodiments, since not only the class, which is "vehicle", but also various geometric characteristics may be distinguished through the input language, all of the vehicles 301, 302, and 303 with various characteristics may be accurately recognized.

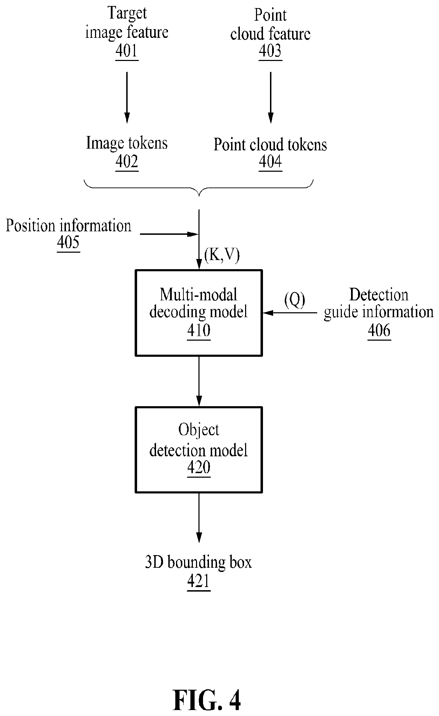

FIG. 4 illustrates an example operation of a multi-modal decoding model, according to one or more embodiments. Referring to FIG. 4, a target image feature 401 may be segmented into image tokens 402, and a point cloud feature 403 may be segmented into point cloud tokens 404 (tokens being forms of extracted features). Position information 405 may include first position information indicating relative positions of the respective image tokens 402 and second position information indicating relative positions of the respective point cloud tokens 404. The relative position may be a position in each image of each token.

Key data and value data (K, V) may be determined based on the image tokens 402, the point cloud tokens 404, the first position information of the position information 405, and the second position information of the position information 405. The key data may be the same as the value data. For example, a matching pair according to the relative positions of the image tokens 402 and the point cloud tokens 404 may be combined (e.g., concatenation) and the key data and the value data may be sequentially configured by adding the first position information and/or the second position information to the combined matching pair.

Detection guide information 406 may indicate detection position candidates having a possibility of detecting a target object in the 3D space. The detection guide information 406 may configure the query data (Q). The detection position candidates may indicate non-uniform positions. Although a description is provided below, briefly, the detection position candidates may be optimized by a detection guide model in a training process of a multi-modal decoding model 410. The detection position candidates may indicate non-uniform positions as an optimization result.

The multi-modal decoding model 410 may correspond to a transformer decoder. The multi-modal decoding model 410 may be executed based on (i.e., applied to) the query data, the key data, and the value data, and may generate/infer a decoding output. The multi-modal decoding model 410 may generate a decoding output by extracting a correlation from the target image feature 401, the point cloud feature 403, and the detection guide information 406 based on the query data, the key data, and the value data. The object detection model 420 may be executed based on (applied to) the decoding output and may determine a 3D bounding box 421. The 3D bounding box 421 may correspond to one of the detection position candidates.

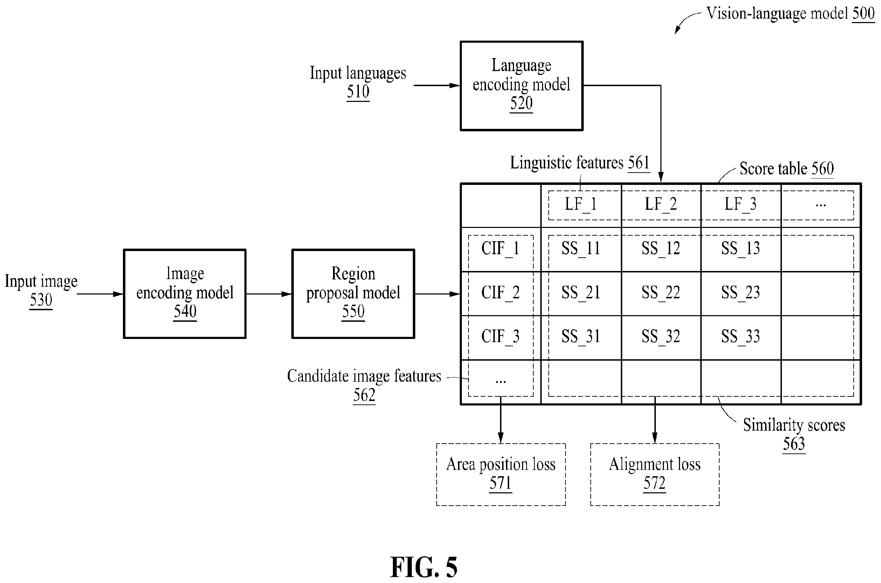

FIG. 5 illustrates an example of a training process of a vision-language model according to one embodiment. Referring to FIG. 5, a vision-language model 500 may include a language encoding model 520, an image encoding model 540, and a region proposal model 550.

The language encoding model 520 may generate linguistic features 561 based on input languages 510 (e.g., words/phrases in the form of text data; as used herein "word" includes a short phrase). The input languages 510 may specify/name respective classes. The input languages 510 may not include position information like the position field 2111 of FIG. 2. For example, the input languages 510 may be prompts describing objects appearing in an input image 530. The objects may correspond to target objects.

The image encoding model 540 may generate an image feature corresponding to the input image 530. The region proposal model 550 may determine candidate image features 562 corresponding to partial areas (regions, possibly non-overlapping) of the input image 530 based on the image feature. The partial areas may be areas where an object is highly likely to exist. An area position loss 571 may represent a difference between ground truth (GT) object areas and object areas proposed by the region proposal model 550. The region proposal model 550 may gain an ability to propose areas where an object is highly likely to exist according to training based on the area position loss 571.

The language features 561 may respectively correspond to the input languages 510. For example, a first linguistic feature LF_1 may correspond to a first input language of the input languages 510, a second linguistic feature LF_2 may correspond to a second input language of the input languages 510, and a third linguistic feature LF_3 may correspond to a third input language of the input languages 510.

The candidate image features 562 may be arranged to match the linguistic features. For example, an image feature corresponding to a class of the first linguistic feature may be determined to be a first candidate image feature CIF_1, an image feature corresponding to a class of the second linguistic feature may be determined to be a second candidate image feature CIF_2, and an image feature corresponding to a class of the third linguistic feature may be determined to be a third candidate image feature CIF_3.

A score table 560 may include similarity scores 563 of similarities between the linguistic features 561 and the candidate image features 562. For example, the similarity scores 563 may be determined based on a Euclidean distance. The similarity scores 563 may be trained such that diagonal elements may have great values based on an alignment loss 572, and off-diagonal elements may have small values. For example, in the score table 560, SS_11, SS_22, and SS_33 may correspond to diagonal elements and SS_12, SS_13, SS_21, SS_23, SS_31, and SS_32 may correspond to off-diagonal elements. Training according to the alignment loss 572 may increase similarity score values of the diagonal elements and may decrease similarity score values of the off-diagonal elements. As a result of training, the score table 560 may be a diagonal matrix or may be close to a diagonal matrix.

Based on the training that is based on the alignment loss 572, pairs of linguistic features and candidate image features (e.g., a pair of LF_1 and CIF_1, a pair of LF_2 and CIF_2, and a pair of LF_3 and CIF_3) with respect to (associated with) the same object may have similar feature values and the language encoding model 520 and the image encoding model 540 may be trained to generate the linguistic features 561 and the candidate image features 562 such that the corresponding pairs have similar feature values. With such training, the vision-language model 500 may gain an ability to solve a problem of open VOD by training based on the alignment loss 572.

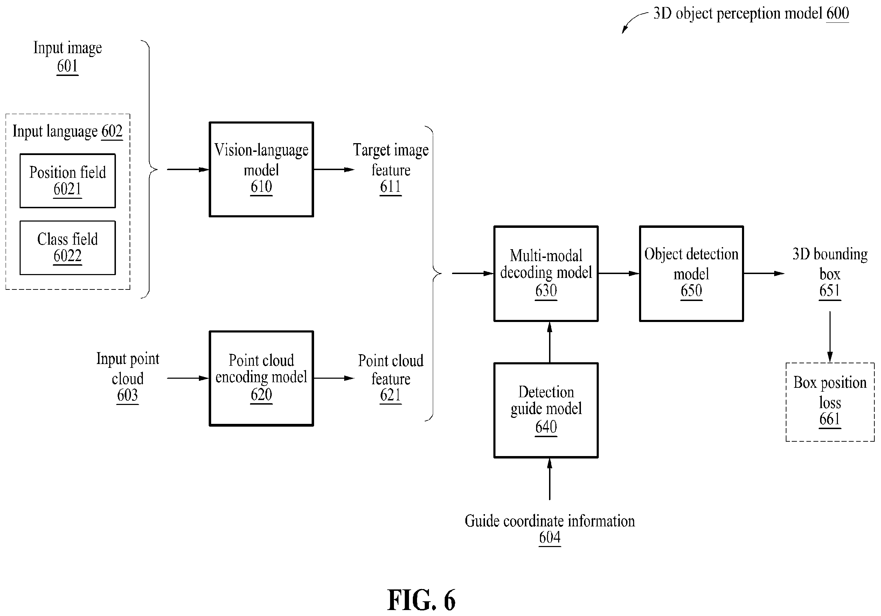

FIG. 6 illustrates an example training process of a 3D object perception model, according to one or more embodiments. Referring to FIG. 6, a 3D object perception model 600 may generate a 3D bounding box 651 corresponding to an input image 601, an input language 602, an input point cloud 603, and guide coordinate information 604, based on a vision-language model 610, a point cloud model 620, a multi-modal decoding model 630, a detection guide model 640, and an object detection model 650.

The vision-language model 610 may generate/infer a target image feature 611 based on the input image 601 and the input language 602. The point cloud encoding model 620 may generate/infer a point cloud feature 621 based on the input point cloud 603. The detection guide model 640 may generate/infer detection guide information from the guide coordinate information 604. The multi-modal decoding model 630 may generate/infer a decoding output based on receiving, as input, the target image feature 611, the point cloud feature 621, and the detection guide information. The object detection model 650 may determine the 3D bounding box 651 based on the decoding output.

The 3D object perception model 600 may be trained based on a box position loss 661 of the 3D bounding box 651. The box position loss 661 may correspond to a difference between the 3D bounding box 651 and a GT bounding box. In this case, when the vision-language model 610 (e.g., a language encoding model, an image encoding model, and a region proposal model), a class field 6022, and the point cloud encoding model 620 are frozen, a position field 6021, the multi-modal decoding model 630, the detection guide model 640, and the object detection model 650 may be trained. For example, the vision-language model 610 may be installed in the 3D object perception model 600 in a state in which the vision-language model 610 is pre-trained based on the manner described with reference to FIG. 5.

The multi-modal decoding model 630 may be used to detect various objects based on open VOD of the vision-language model 610. A typical previous object perception model may determine and learn a class of a target object in advance, and an addition of a new class may require fully retraining the model (including training for the class already learned). The open VOD of the vision-language model 610 may generate the target image feature 611 of various objects including a new class without such a new learning process. The multi-modal decoding model 630 may identify shapes of various objects including a new object with the target image feature 611 and may generate a decoding output to determine the 3D bounding box 651 of the objects.

The input language 602 may be extended to expressions including respective position fields 6021 and class fields 6022. The position field 6021 may have a learnable characteristic and the class field 6022 may be frozen (not learned). For example, the position field 6021 may include learnable parameters having a predetermined size and the parameters may be trained to decrease the box position loss 661 during the training process of the multi-modal decoding model 630.

The position field 6021 may be initialized to an arbitrary value and may be contextually optimized using the box position loss 661 to contain spatial information. As a result of learning, the position field 6021 and the class field 6022 may be paired and a spatial identity may be assigned to each of the objects of the same class having different geometric characteristics. The training method may not encode spatial information in an extrinsic method but may cause the 3D object perception model to learn spatial information in an intrinsic method using a 3D label, thereby, many queries may be initialized at a statistically significant position by the detection guide model 640 compared to a conventional method in which anchors are distributed at an equal/regular interval.

The detection guide model 640 may generate detection guide information based on the guide coordinate information 604. The detection guide information may indicate detection position candidates that have a possibility of detecting a target object of the input language 602 in the 3D space. The guide coordinate information 604 may indicate uniform positions with respect to the 3D space and the detection guide information may indicate non-uniform positions with respect to the 3D space (by the detection guide model 640 adjusting the uniform positions). Based on the training of the detection guide model 640, the uniform positions of the guide coordinate information 604 may be adjusted to the non-uniform positions of the detection guide information. The detection guide model 640 may adjust the uniform positions to the non-uniform positions such that it provides (via influence on the multi-modal decoding model 630) a high possibility of detecting the target object based on a training data set.

The detection guide model 640 may be a neural network model, such as a 1*1 CNN. A dimension of the guide coordinate information 604 may be adjusted by the detection guide model 640 to match an input dimension of the multi-modal decoding model 630.

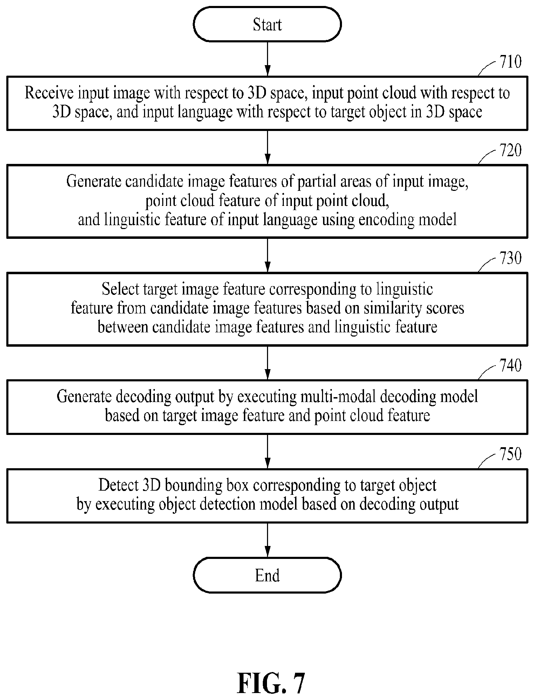

FIG. 7 illustrates an example of a 3D object recognition method, according to one or more embodiments. Referring to FIG. 7, in operation 710, an electronic device may receive an input image with respect to a 3D space, an input point cloud with respect to the 3D space, and an input language with respect to a target object in the 3D space. The electronic device may (i) generate candidate image features of partial areas of the input image using an encoding model, a point cloud feature of the input point cloud, and a linguistic feature of the input language in operation 720, (ii) select a target image feature corresponding to the linguistic feature from the candidate image features based on similarity scores between the candidate image features and the linguistic feature in operation 730, (iii) generate a decoding output by executing a multi-modal decoding model based on the target image feature and the point cloud feature in operation 740, and (iv) detect a 3D bounding box corresponding to the target object by executing an object detection model based on the decoding output in operation 750.

Operation 720 may include (i) an operation of generating/inferring the linguistic feature corresponding to the input language by executing a language encoding model based on (applying the model to) the input language, (ii) an operation of generating the candidate image features corresponding to the partial areas of the input image by executing an image encoding model and a region proposal model based on the input image, and (iii) an operation of generating a point cloud feature corresponding to the input point cloud by executing a point cloud encoding model based on the input point cloud.

Extended expressions including respective position fields (indicating a geometric characteristic of the target object based on the input language) and respective class fields indicating a class of the target object may be generated, and the linguistic feature may be generated based on the extended expressions. Objects of the same class but with different geometric characteristics may be distinguished based on the position field. The position field may have a learnable characteristic (may be learnable).

Operation 740 may include (i) an operation of generating image tokens by segmenting the target image feature, (ii) an operation of generating point cloud tokens by segmenting the point cloud feature, an operation of generating first position information indicating relative positions of the image tokens, (iii) an operation of generating second position information indicating relative positions of the point cloud tokens, and (iii) an operation of executing the multi-modal decoding model with key data and value data based on inputs thereto such as the image tokens, the point cloud tokens, the first position information, and the second position information.

Operation 740 may include an operation of executing the multi-modal decoding model with query data based on detection guide information which indicates detection position candidates with a possibility of detecting the target object in the 3D space. The detection position candidates may indicate non-uniform positions (position candidates non-uniformly distributed). The multi-modal decoding model may generate a decoding output by extracting a correlation from the target image feature, the point cloud feature, and the detection guide information.

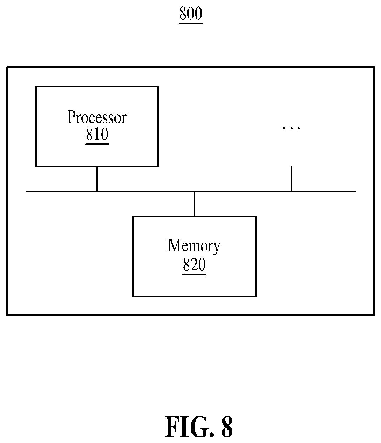

FIG. 8 illustrates an example configuration of an electronic device, according to one or more embodiments. Referring to FIG. 8, an electronic device 800 may include a processor 810 and a memory 820. Although not shown in FIG. 8, the electronic device 800 may further include other devices, such as a camera, a lidar sensor, a storage device, an input device, an output device, and a network device. For example, the electronic device 800 may correspond to any device that is able to recognize a surrounding environment using a camera or a sensor (e.g., lidar), such as a vehicle, a robot, or a mobile device.

The memory 820 may be connected to the processor 810 and may store instructions executable by the processor 810, data to be computed by the processor 810, data processed by the processor 810, or a combination thereof. In practice, the processor 810 may be a combination of processors, which are mentioned below. The memory 820 may include a non-transitory computer-readable medium (for example, a high-speed random access memory) and/or a non-volatile computer-readable medium (e.g., a disk storage device, a flash memory device, or other non-volatile solid-state memory devices).

The processor 810 may execute the instructions to perform the operations described above with reference to FIGS. 1 to 7 and 9. For example, when instructions are executed by the processor 810, the electronic device 800 may receive an input image with respect to a 3D space, an input point cloud with respect to the 3D space, and an input language with respect to a target object in the 3D space, may generate candidate image features of partial areas of the input image using an encoding model, a point cloud feature of the input point cloud, and a linguistic feature of the input language, may select a target image feature corresponding to the linguistic feature from the candidate image features based on similarity scores between the candidate image features and the linguistic feature, may generate a decoding output by executing a multi-modal decoding model based on the target image feature and the point cloud feature, and may detect a 3D bounding box corresponding to the target object by executing an object detection model based on the decoding output. The input image may be generated by a camera, and the input point cloud may be generated by a lidar sensor. The input language may be set by a user or may be set in advance.

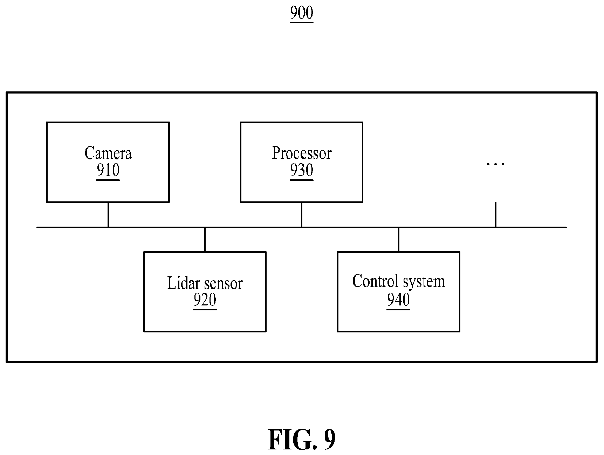

FIG. 9 illustrates an example configuration of a vehicle according to one or more embodiments. Referring to FIG. 9, a vehicle 900 may include a camera 910, a lidar sensor 920, a processor 930, and a control system 940. Although not shown in FIG. 9, the vehicle 900 may further include other devices, such as a storage device, a memory, an input device, an output device, a network device, and a drive system.

The camera 910 may generate an input image with respect to a 3D space, and the lidar sensor 920 may generate an input point cloud with respect to the 3D space. The input language may be set by a user or may be set in advance. The processor 930 may execute instructions to perform operations described above with reference to FIGS. 1 to 8. For example, the processor 930 may receive an input image with respect to a 3D space, an input point cloud with respect to the 3D space, and an input language with respect to a target object in the 3D space, may generate candidate image features of partial areas of the input image using an encoding model, a point cloud feature of the input point cloud, and a linguistic feature of the input language, may select a target image feature corresponding to the linguistic feature from the candidate image features based on similarity scores between the candidate image features and the linguistic feature, may generate a decoding output by executing a multi-modal decoding model based on the target image feature and the point cloud feature, and may detect a 3D bounding box corresponding to the target object by executing an object detection model based on the decoding output. The control system 940 may control the vehicle 900 and/or a drive system based on an object perception result. For example, the control system 940 may control the velocity and/or steering of the vehicle 900 based on a 3D object perception result (e.g., a 3D bounding box).

The computing apparatuses, the vehicles, the electronic devices, the processors, the memories, the image sensors, the vehicle/operation function hardware, the ADAS/AD systems, the displays, the information output system and hardware, the storage devices, and other apparatuses, devices, units, modules, and components described herein with respect to FIGS. 1-9 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-9 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the disclosure may also be defined by the claims, and all variations within the scope of the claims are to be construed as being included in the disclosure.

## Claims

1. A method of detecting a three-dimensional, 3D, object, the method comprising:
receiving (710) an input image with respect to a 3D space, an input point cloud with respect to the 3D space, and an input language with respect to a target object in the 3D space;
generating (720) a linguistic feature corresponding to the input language by a language encoding model performing inference on the input language;
generating (720) candidate image features corresponding to partial areas of the input image by executing an image encoding model and a region proposal model based on the input image;
generating (720) a point cloud feature corresponding to the input point cloud by executing a point cloud encoding model based on the input point cloud;
selecting (730) a target image feature corresponding to the linguistic feature from among the candidate image features based on similarity scores of similarities between the candidate image features and the linguistic feature, said similarity scores being provided in a score table and determined based on the Euclidean distance between sub-features of the linguistic feature and the candidate image features, wherein the target image feature is selected from among the candidate image features having the highest similarity scores of similarity to the sub features of the linguistic feature;
generating (740) a decoding output by executing a multi-modal decoding model based on the target image feature and the point cloud feature; and
determining (750) a 3D bounding box corresponding to the target object by executing an object detection model based on the decoding output.

2. The method of claim 1, further comprising generating extended expressions each comprising a position field indicating a geometric characteristic of the target object based on the input language and comprising a class field indicating a class of the target object, and
wherein the linguistic feature is generated based on the extended expressions.

3. The method of claim 2, wherein objects of a same class and with different geometric characteristics are distinguished from each other based on the position fields of the extended expressions; and/or wherein the position field is learned through training.

4. The method of any one of the previous claims, wherein the generating of the decoding output comprises:
generating image tokens by segmenting the target image feature;
generating point cloud tokens by segmenting the point cloud feature;
generating first position information indicating relative positions of the respective image tokens;
generating second position information indicating relative positions of the respective point cloud tokens; and
executing the multi-modal decoding model with key data and value data based on the image tokens, the point cloud tokens, the first position information, and the second position information.

5. The method of claim 4, wherein the generating of the decoding output further comprises executing the multi-modal decoding model with query data based on detection guide information indicating detection position candidates with a possibility of detecting the target object in the 3D space.

6. The method of claim 5, wherein the detection position candidates are distributed non-uniformly; and/or
wherein the multi-modal decoding model generates the decoding output by extracting a correlation from the target image feature, the point cloud feature, and the detection guide information.

7. A non-transitory computer-readable storage medium storing instructions that, when executed by a processor, cause the processor to perform the method of any one of the previous claims.

8. An electronic device comprising:
one or more processors (810); and
a memory (820) storing instructions configured to cause the one or more processors (810) to:
receive an input image (101, 230) with respect to a three-dimensional, 3D, space, an input point cloud (103) with respect to the 3D space, and an input language (102, 210) with respect to a target object in the 3D space;
generate a linguistic feature (261) corresponding to the input language (102, 210) by a language encoding model (220) performing inference on the input language (102, 210);
generate candidate image features (262) corresponding to partial areas of the input image (101, 230) by executing an image encoding model (240) and a region proposal model (250) based on the input image (101, 230);
generate a point cloud feature (121) corresponding to the input point cloud (103) by executing a point cloud encoding model (120) based on the input point cloud (103);
select a target image feature (111) corresponding to the linguistic feature (261) from the candidate image features (262) based on similarity scores (263) of similarities between the candidate image features (262) and the linguistic feature (261), said similarity scores (263) being provided in a score table (260) and determined based on the Euclidean distance between sub-features of the linguistic feature (261) and the candidate image features (262), wherein the target image feature (111) is selected from among the candidate image features (262) having the highest similarity scores of similarity to the sub features of the linguistic feature (261);
generate a decoding output by executing a multi-modal decoding model (130) based on the target image feature (111) and the point cloud feature (121); and
determine a 3D bounding box (141) corresponding to the target object by executing an object detection model (140) based on the decoding output.

9. The electronic device of claim 8, wherein the instructions are further configured to cause the one or more processors to generate extended expressions each comprising a position field indicating a geometric characteristic of the target object based on the input language and a class field indicating a class of the target object, and
wherein the linguistic feature is generated based on the extended expressions.

10. The electronic device of claim 9, wherein objects of a same class with different geometric characteristics are distinguished from each other based on the position field; and/or wherein the position field is learned through training.

11. The electronic device of any one of claims 8-9, wherein, the instructions are further configured to cause the one or more processors to:
generate image tokens by segmenting the target image feature,
generate point cloud tokens by segmenting the point cloud feature,
generate first position information indicating relative positions of the respective image tokens,
generate second position information indicating relative positions of the respective point cloud tokens, and
execute the multi-modal decoding model with key data and value data based on the image tokens, the point cloud tokens, the first position information, and the second position information.

12. The electronic device of claim 11, wherein the instructions are further configured to cause the one or more processors to execute the multi-modal decoding model with query data based on detection guide information indicating detection position candidates with a possibility of detecting the target object in the 3D space;
wherein, preferably, the detection position candidates are non-uniformly distributed; and
wherein, optionally, the multi-modal decoding model is configured to generate the decoding output by extracting a correlation from the target image feature, the point cloud feature, and the detection guide information.

13. A vehicle comprising:
a camera configured to generate an input image with respect to a three-dimensional (3D) space;
a light detection and ranging, lidar, sensor configured to generate an input point cloud with respect to the 3D space;
one or more processors configured to perform the method of any one of claims 1-6; and
a control system configured to control the vehicle based on the 3D bounding box.

## Patentansprüche

1. Verfahren zur Erfassung eines dreidimensionalen (3D) Objekts, wobei das Verfahren Folgendes umfasst:
Empfangen (710) eines Eingabebildes in Bezug auf einen 3D-Raum, einer Eingabepunktwolke in Bezug auf den 3D-Raum und einer Eingabesprache in Bezug auf ein Zielobjekt in dem 3D-Raum;
Erzeugen (720) eines linguistischen Merkmals, das der Eingabesprache entspricht, durch ein Sprachcodiermodell, das eine Inferenz auf die Eingabesprache durchführt;
Erzeugen (720) von Kandidatenbildmerkmalen, die Teilbereichen des Eingabebildes entsprechen, durch Ausführen eines Bildcodiermodells und eines Bereichsvorschlagsmodells basierend auf dem Eingabebild;
Erzeugen (720) eines Punktwolkenmerkmals, das der Eingabepunktwolke entspricht, durch Ausführen eines Punktwolkencodiermodells basierend auf der Eingabepunktwolke;
Auswählen (730) eines Zielbildmerkmals unter den Kandidatenbildmerkmalen, das dem linguistischen Merkmal entspricht, basierend auf Ähnlichkeitsbewertungen von Ähnlichkeiten zwischen den Kandidatenbildmerkmalen und dem linguistischen Merkmal, wobei die Ähnlichkeitsbewertungen in einer Bewertungstabelle bereitgestellt werden und basierend auf dem euklidischen Abstand zwischen Untermerkmalen des linguistischen Merkmals und den Kandidatenbildmerkmalen bestimmt werden, wobei das Zielbildmerkmal unter den Kandidatenbildmerkmalen ausgewählt wird, die die höchsten Ähnlichkeitsbewertungen der Ähnlichkeit mit den Untermerkmalen des sprachlichen Merkmals aufweisen;
Erzeugen (740) einer Decodierausgabe durch Ausführen eines multimodalen Decodiermodells basierend auf dem Zielbildmerkmal und dem Punktwolkenmerkmal; und
Bestimmen (750) eines 3D-Begrenzungsrahmens, der dem Zielobjekt entspricht, durch Ausführen eines Objekterfassungsmodells basierend auf der Decodierausgabe.

2. Verfahren nach Anspruch 1, das ferner das Erzeugen erweiterter Ausdrücke umfasst, die jeweils ein Positionsfeld umfassen, das eine geometrische Eigenschaft des Zielobjekts basierend auf der Eingabesprache angibt, und ein Klassenfeld umfassen, das eine Klasse des Zielobjekts angibt, und wobei das linguistische Merkmal basierend auf den erweiterten Ausdrücken erzeugt wird.

3. Verfahren nach Anspruch 2, wobei Objekte einer gleichen Klasse und mit unterschiedlichen geometrischen Eigenschaften voneinander basierend auf den Positionsfeldern der erweiterten Ausdrücke unterschieden werden; und/oder wobei das Positionsfeld durch Training erlernt wird.

4. Verfahren nach einem der vorhergehenden Ansprüche, wobei das Erzeugen der Decodierausgabe Folgendes umfasst:
Erzeugen von Bildtoken durch Segmentieren des Zielbildmerkmals;
Erzeugen von Punktwolkentoken durch Segmentieren des Punktwolkenmerkmals;
Erzeugen erster Positionsinformationen, die relative Positionen der jeweiligen Bildtoken angeben;
Erzeugen zweiter Positionsinformationen, die relative Positionen der jeweiligen Punktwolkentoken angeben; und
Ausführen des multimodalen Decodiermodells mit Schlüsseldaten und Wertdaten basierend auf den Bildtoken, den Punktwolkentoken, den ersten Positionsinformationen und den zweiten Positionsinformationen.

5. Verfahren nach Anspruch 4, wobei das Erzeugen der Decodierausgabe ferner das Ausführen des multimodalen Decodiermodells mit Abfragedaten basierend auf Erfassungsleitinformationen umfasst, die Kandidaten für die Erfassungsposition mit einer Möglichkeit zum Erfassen des Zielobjekts in dem 3D-Raum angeben.

6. Verfahren nach Anspruch 5, wobei die Kandidaten für die Erfassungsposition ungleichmäßig verteilt sind; und/oder
wobei das multimodale Decodiermodell die Decodierausgabe durch Extrahieren einer Korrelation aus dem Zielbildmerkmal, dem Punktwolkenmerkmal und den Erfassungsleitinformationen erzeugt.

7. Übergangsloses computerlesbares Speichermedium, auf dem Anweisungen gespeichert sind, die, wenn sie von einem Prozessor ausgeführt werden, bewirken, dass der Prozessor das Verfahren nach einem der vorhergehenden Ansprüche durchführt.

8. Elektronische Vorrichtung, die Folgendes umfasst:
einen oder mehrere Prozessoren (810); und
einen Speicher (820), in dem Anweisungen gespeichert sind, die konfiguriert sind, um den einen oder die mehreren Prozessoren (810) zu Folgendem zu veranlassen:
Empfangen eines Eingabebildes (101, 230) in Bezug auf einen dreidimensionalen (3D) Raum, einer Eingabepunktwolke (103) in Bezug auf den 3D-Raum und einer Eingabesprache (102, 210) in Bezug auf ein Zielobjekt in dem 3D-Raum;
Erzeugen eines linguistischen Merkmals (261), das der Eingabesprache (102, 210) entspricht, durch ein Sprachcodiermodell (220), das eine Inferenz auf die Eingabesprache (102, 210) durchführt;
Erzeugen von Kandidatenbildmerkmalen (262), die Teilbereichen des Eingabebildes (101, 230) entsprechen, durch Ausführen eines Bildcodiermodells (240) und eines Bereichsvorschlagsmodells (250) basierend auf dem Eingabebild (101, 230);
Erzeugen eines Punktwolkenmerkmals (121), das der Eingabepunktwolke (103) entspricht, durch Ausführen eines Punktwolkencodiermodells (120) basierend auf der Eingabepunktwolke (103);
Auswählen eines Zielbildmerkmals (111) unter den Kandidatenbildmerkmalen (262), das dem linguistischen Merkmal (261) entspricht, basierend auf Ähnlichkeitsbewertungen (263) von Ähnlichkeiten zwischen den Kandidatenbildmerkmalen (262) und dem linguistischen Merkmal (261), wobei die Ähnlichkeitsbewertungen (263) in einer Bewertungstabelle (260) bereitgestellt werden und basierend auf dem euklidischen Abstand zwischen Untermerkmalen des linguistischen Merkmals (261) und den Kandidatenbildmerkmalen (262) bestimmt werden, wobei das Zielbildmerkmal (111) unter den Kandidatenbildmerkmalen (262) ausgewählt wird, die die höchsten Ähnlichkeitsbewertungen der Ähnlichkeit mit den Untermerkmalen des sprachlichen Merkmals (261) aufweisen;
Erzeugen einer Decodierausgabe durch Ausführen eines multimodalen Decodiermodells (130) basierend auf dem Zielbildmerkmal (111) und dem Punktwolkenmerkmal (121); und
Bestimmen eines 3D-Begrenzungsrahmens (141), der dem Zielobjekt entspricht, durch Ausführen eines Objekterfassungsmodells (140) basierend auf der Decodierausgabe.

9. Elektronische Vorrichtung nach Anspruch 8, wobei die Anweisungen ferner so konfiguriert sind, dass sie den einen oder die mehreren Prozessoren veranlassen, erweiterte Ausdrücke zu erzeugen, die jeweils ein Positionsfeld, das eine geometrische Eigenschaft des Zielobjekts basierend auf der Eingabesprache angibt, und ein Klassenfeld umfassen, das eine Klasse des Zielobjekts angibt, und wobei das linguistische Merkmal basierend auf den erweiterten Ausdrücken erzeugt wird.

10. Elektronische Vorrichtung nach Anspruch 9, wobei Objekte einer gleichen Klasse mit unterschiedlichen geometrischen Eigenschaften voneinander basierend auf dem Positionsfeld unterschieden werden; und/oder wobei das Positionsfeld durch Training erlernt wird.

11. Elektronische Vorrichtung nach einem der Ansprüche 8 bis 9, wobei die Anweisungen ferner konfiguriert sind, um den einen oder die mehreren Prozessoren zu Folgendem zu veranlassen:
Erzeugen von Bildtoken durch Segmentieren des Zielbildmerkmals,
Erzeugen von Punktwolkentoken durch Segmentieren des Punktwolkenmerkmals,
Erzeugen erster Positionsinformationen, die relative Positionen der jeweiligen Bildtoken angeben,
Erzeugen zweiter Positionsinformationen, die relative Positionen der jeweiligen Punktwolkentoken angeben, und
Ausführen des multimodalen Decodiermodells mit Schlüsseldaten und Wertdaten basierend auf den Bildtoken, den Punktwolkentoken, den ersten Positionsinformationen und den zweiten Positionsinformationen.

12. Elektronische Vorrichtung nach Anspruch 11, wobei die Anweisungen ferner so konfiguriert sind, dass sie den einen oder die mehreren Prozessoren veranlassen, das multimodale Decodiermodell mit Abfragedaten basierend auf Erfassungsleitinformationen auszuführen, welche Erfassungspositionskandidaten mit einer Möglichkeit zum Erfassen des Zielobjekts in dem 3D-Raum angeben;
wobei vorzugsweise die Erkennungspositionskandidaten ungleichmäßig verteilt sind; und
wobei optional das multimodale Decodiermodell konfiguriert ist, um die Decodierausgabe durch Extrahieren einer Korrelation aus dem Zielbildmerkmal, dem Punktwolkenmerkmal und den Erfassungsleitinformationen zu erzeugen.

13. Fahrzeug, das Folgendes umfasst:
eine Kamera, die konfiguriert ist, um ein Eingabebild in Bezug auf einen dreidimensionalen (3D) Raum zu erzeugen;
einen Lichterfassungs- und Entfernungsmessungssensor (Lidar-Sensor), der konfiguriert ist, um eine Eingabepunktwolke in Bezug auf den 3D-Raum zu erzeugen;
einen oder mehrere Prozessoren, die so konfiguriert sind, dass sie das Verfahren nach einem der Ansprüche 1 bis 6 durchführen; und
ein Steuersystem, das so konfiguriert ist, dass es das Fahrzeug basierend auf dem 3D-Begrenzungsrahmen steuert.

## Revendications

1. Procédé de détection d'un objet tridimensionnel (3D), le procédé comprenant :
la réception (710) d'une image d'entrée ayant trait à un espace 3D, d'un nuage de points d'entrée ayant trait à l'espace 3D et d'une parole d'entrée ayant trait à un objet cible présent dans l'espace 3D ;
la génération (720) d'une caractéristique linguistique correspondant à la parole d'entrée par un modèle d'encodage de parole effectuant une inférence sur la parole d'entrée ;
la génération (720) de caractéristiques d'image candidates correspondant à des zones partielles de l'image d'entrée par exécution d'un modèle d'encodage d'image et d'un modèle de proposition de région compte tenu de l'image d'entrée ;
la génération (720) d'une caractéristique de nuage de points correspondant au nuage de points d'entrée par exécution d'un modèle d'encodage de nuage de points compte tenu du nuage de points d'entrée ;
la sélection (730) d'une caractéristique d'image cible correspondant à la caractéristique linguistique parmi les caractéristiques d'image candidates compte tenu de scores de similarité indicatifs des similarités entre les caractéristiques d'image candidates et la caractéristique linguistique, lesdits scores de similarité étant fournis dans un tableau de scores et étant déterminés compte tenu de la distance euclidienne entre des sous-caractéristiques de la caractéristique linguistique et les caractéristiques d'image candidates, ladite caractéristique d'image cible étant sélectionnée parmi les caractéristiques d'image candidates dont les scores indiquent la similarité la plus élevée avec les sous-caractéristiques de la caractéristique linguistique ;
la génération (740) d'une sortie de décodage par exécution d'un modèle de décodage multimodal compte tenu de la caractéristique d'image cible et de la caractéristique de nuage de points ; et
la détermination (750) d'une boîte englobante 3D correspondant à l'objet cible par exécution d'un modèle de détection d'objet compte tenu de la sortie de décodage.

2. Procédé selon la revendication 1, comprenant en outre la génération d'expressions étendues comprenant chacune un champ de position indiquant une particularité géométrique de l'objet cible en fonction de la parole d'entrée et comprenant un champ de classe indiquant une classe de l'objet cible, et
dans lequel la caractéristique linguistique est générée à partir des expressions étendues.

3. Procédé selon la revendication 2, dans lequel des objets d'une même classe et présentant des propriétés géométriques différentes sont distingués les uns des autres compte tenu des champs de position des expressions étendues ; et/ou dans lequel le champ de position est appris par entraînement.

4. Procédé selon l'une quelconque des revendications précédentes, dans lequel la génération de la sortie de décodage comprend :
la génération de jetons d'image par segmentation de la caractéristique d'image cible ;
la génération de jetons de nuage de points par segmentation de la caractéristique de nuage de points ;
la génération de premières informations de position indiquant les positions relatives des jetons d'image respectifs ;
la génération de deuxièmes informations de position indiquant les positions relatives des jetons de nuage de points respectifs ; et
l'exécution du modèle de décodage multimodal avec des données clé et des données valeur compte tenu des jetons d'image, des jetons de nuage de points, des premières informations de position et des deuxièmes informations de position.

5. Procédé selon la revendication 4, dans lequel la génération de la sortie de décodage comprend en outre l'exécution du modèle de décodage multimodal avec des données de requête compte tenu d'informations de guidage de détection indiquant des candidats de position de détection offrant une possibilité de détecter l'objet cible dans l'espace 3D.

6. Procédé selon la revendication 5, dans lequel les candidats de position de détection sont répartis de manière non uniforme ; et/ou
dans lequel le modèle de décodage multimodal génère la sortie de décodage en extrayant une corrélation à partir de la caractéristique d'image cible, de la caractéristique de nuage de points et des informations de guidage de détection.

7. Support de stockage non transitoire lisible par ordinateur contenant des instructions qui, lorsqu'elles sont exécutées par un processeur, amènent le processeur à mettre en œuvre le procédé selon l'une quelconque des revendications précédentes.

8. Appareil électronique comprenant :
un ou plusieurs processeurs (810), et
une mémoire (820) dans laquelle sont stockées des instructions conçues pour amener le ou les processeurs (810) à :
recevoir une image d'entrée (101, 230) ayant trait à un espace tridimensionnel (3D), un nuage de points d'entrée (103) ayant trait à l'espace 3D et une parole d'entrée (102, 210) ayant trait à un objet cible présent dans l'espace 3D ;
générer une caractéristique linguistique (261) correspondant à la parole d'entrée (102, 210) au moyen d'un modèle d'encodage de parole (220) effectuant une inférence sur la parole d'entrée (102, 210) ;
générer des caractéristiques d'image candidates (262) correspondant à des zones partielles de l'image d'entrée (101, 230) par exécution d'un modèle d'encodage d'image (240) et d'un modèle de proposition de région (250) compte tenu de l'image d'entrée (101, 230) ;
générer une caractéristique de nuage de points (121) correspondant au nuage de points d'entrée (103) par exécution d'un modèle d'encodage de nuage de points (120) compte tenu du nuage de points d'entrée (103) ;
sélectionner une caractéristique d'image cible (111) correspondant à la caractéristique linguistique (261) parmi les caractéristiques d'image candidates (262) compte tenu de scores de similarité (263) indicatifs des similarités entre les caractéristiques d'image candidates (262) et la caractéristique linguistique (261), lesdits scores de similarité (263) étant fournis dans un tableau de scores (260) et étant déterminés compte tenu de la distance euclidienne entre des sous-caractéristiques de la caractéristique linguistique (261) et les caractéristiques d'image candidates (262), ladite caractéristique d'image cible (111) étant sélectionnée parmi les caractéristiques d'image candidates (262) dont les scores indiquent la similarité la plus élevée avec les sous-caractéristiques de la caractéristique linguistique (261) ;
générer une sortie de décodage par exécution d'un modèle de décodage multimodal (130) compte tenu de la caractéristique d'image cible (111) et de la caractéristique de nuage de points (121) ; et
déterminer une boîte englobante 3D (141) correspondant à l'objet cible par exécution d'un modèle de détection d'objet (140) compte tenu de la sortie de décodage.

9. Appareil électronique selon la revendication 8, dans lequel les instructions sont en outre conçues pour amener le ou les processeurs à générer des expressions étendues comprenant chacune un champ de position indiquant une particularité géométrique de l'objet cible en fonction de la parole d'entrée et un champ de classe indiquant une classe de l'objet cible, et
dans lequel la caractéristique linguistique est générée à partir des expressions étendues.

10. Appareil électronique selon la revendication 9, dans lequel des objets d'une même classe présentant des propriétés géométriques différentes sont distingués les uns des autres compte tenu du champ de position ; et/ou dans lequel le champ de position est appris par entraînement.

11. Appareil électronique selon l'une quelconque des revendications 8 et 9, dans lequel les instructions sont en outre conçues pour amener le ou les processeurs à :
générer des jetons d'image par segmentation de la caractéristique d'image cible,
générer des jetons de nuage de points par segmentation de la caractéristique de nuage de points,
générer des premières informations de position indiquant les positions relatives des jetons d'image respectifs,
générer des deuxièmes informations de position indiquant les positions relatives des jetons de nuage de points respectifs, et
exécuter le modèle de décodage multimodal avec des données clé et des données valeur compte tenu des jetons d'image, des jetons de nuage de points, des premières informations de position et des deuxièmes informations de position.

12. Appareil électronique selon la revendication 11, dans lequel les instructions sont en outre conçues pour amener le ou les processeurs à exécuter le modèle de décodage multimodal avec des données de requête compte tenu d'informations de guidage de détection indiquant des candidats de position de détection offrant une possibilité de détecter l'objet cible dans l'espace 3D ;
dans lequel, de préférence, les candidats de position de détection sont répartis de manière non uniforme ; et
dans lequel, facultativement, le modèle de décodage multimodal est conçu pour générer la sortie de décodage en extrayant une corrélation à partir de la caractéristique d'image cible, de la caractéristique de nuage de points et des informations de guidage de détection.

13. Véhicule comprenant :
une caméra conçue pour générer une image d'entrée ayant trait à un espace tridimensionnel (3D) ;
un capteur de détection et de télémétrie par laser (dit « lidar ») conçu pour générer un nuage de points d'entrée ayant trait à l'espace 3D ;
un ou plusieurs processeurs conçus pour mettre en œuvre le procédé selon l'une quelconque des revendications 1 à 6 ; et
un système de commande conçu pour commander le véhicule en fonction de la boîte englobante 3D.
